# EUROPÄISCHE PATENTSCHRIFT

(11) **EP 2 510 806 B1**
(45) Veröffentlichungstag und Bekanntmachung des Hinweises auf die Patenterteilung: **19.06.2019**
(21) Anmeldenummer: 12163958.7
(22) Anmeldetag: 12.04.2012
(51) Int. Cl.: A23G 1/18, A23G 1/00

(54) **Anlernen einer Temperiermaschine für die direkte Einstellbarkeit des Temperiergrads**
Teach-in of a tempering machine for directly adjusting the tempering degree
Formation d'une machine de thermorégulation permettant de régler directement le degré d'équilibrage des températures

(30) Priorität: 15.04.2011 DE 102011002082
(43) Veröffentlichungstag der Anmeldung: 17.10.2012
(73) Patentinhaber: Sollich KG, 32105 Bad Salzuflen (DE)
(72) Erfinder: Laut, Reinhard, 32479 Hille (DE)
(74) Vertreter: REHBERG HÜPPE + PARTNER

(56) Entgegenhaltungen:
- EP-A1- 1 149 536
- EP-A1- 1 859 686
- WO-A1-00/72695
- DE-A1-102004 021 135
- DE-A1-102009 011 969
- US-A- 3 154 137

## Beschreibung

### TECHNISCHES GEBIET DER ERFINDUNG

Die Erfindung betrifft ein Verfahren zum Anlernen einer Temperiermaschine für die direkte Einstellbarkeit eines Temperiergrads einer in der Temperiermaschine zu temperierenden Süßwarenmasse.

Eine Temperiermaschine dient insbesondere zum kontinuierlichen Aufbereiten von zu verarbeitenden fetthaltigen Massen, insbesondere Schokolademasse, durch Wärmebehandlung. Die Schokolademasse kann Kakaobutter und/oder andere Fettmassen enthalten. Eine solche Masse wird üblicherweise aufgeschmolzen oder jedenfalls erwärmt. Sie liegt dann in flüssigem pumpbaren Zustand vor und ist im Wesentlichen kristallfrei. Die Masse wird dann temperiert sowie anschließend einer Weiterverarbeitung zugeführt.

### STAND DER TECHNIK

Aus der deutschen Patentanmeldung DE 10 2009 011 969 A1 sind ein Verfahren und eine Temperiermaschine zum kontinuierlichen Aufbereiten einer zu verarbeitenden fetthaltigen Masse, insbesondere einer Schokolademasse, bekannt. Das dort gezeigte neue Regelverfahren ermöglicht eine kontinuierliche Aufbereitung der Masse mit konstantem Temperiergrad, ohne dass zur Durchführung des Verfahrens spezielle Fachleute mit der entsprechenden Erfahrung notwendig sind. Abweichungen von dem eingestellten Temperiergrad werden kontinuierlich ausgeregelt. Die Bedienung der Temperiermaschine wird somit wesentlich vereinfacht.

Dies wird dadurch erreicht, dass anstelle der vergleichsweise komplizierten Einstellung einzelner Regler für die Temperaturen und Mengen der Süßwarenmasse und der Temperiermedien nur eine einzige Größe, nämlich direkt der gewünschte Temperiergrad (Temperiergradsollwert), geändert werden muss. Dabei erfolgt während des normalen Produktionsbetriebs der Temperiermaschine eine automatische Regelung derart, dass nach dem Eingeben des gewünschten Temperiergradsollwerts in die Regeleinrichtung der Temperiergradistwert der temperierten Masse ermittelt, mit dem gewünschten Temperiergradsollwert verglichen und aus der Differenzbildung eine Auswahlgröße gewonnen wird, die dann zur Ansteuerung einzelner Regler verwendet und somit der Temperiergradistwert solange geändert wird, bis er mit dem Temperiergradsollwert übereinstimmt.

### AUFGABE DER ERFINDUNG

Der Erfindung liegt die Aufgabe zugrunde, ein Verfahren, eine Vorrichtung und eine Software bereitzustellen, mit denen eine Temperiermaschine für die direkte Einstellbarkeit eines Temperiergrads einer in der Temperiermaschine zu temperierenden Süßwarenmasse vorbereitet werden kann.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### WEITERER STAND DER TECHNIK

Aus der europäischen Patentanmeldung EP 1 149 536 A1 ist ein Verfahren zum Temperieren von Schokolademasse bekannt. Dabei wird zunächst der Temperiergrad gemessen und die Kühlung so eingestellt, dass ein bestimmter Temperiergrad erreicht wird. Eine Regelung des Temperiergrads ist diesem Dokument des Stands der Technik nicht zu entnehmen.

Aus der britischen Patentanmeldung GB 2 186 476 A ist ein Verfahren zum Temperieren von essbaren fetthaltigen Massen, wie insbesondere Schokolademasse, bekannt. Bei dem Verfahren wird die Viskosität der Masse überwacht und die Kühlung der Masse in Abhängigkeit hiervon eingestellt. Eine Regelung zur Einstellung des Temperiergrads ist diesem Dokument des Stands der Technik nicht zu entnehmen.

Aus der deutschen Patentanmeldung DE 10 2004 021 135 A1 ist eine Vorrichtung zur Bestimmung des Temperiergrads einer Fettmasse, insbesondere Schokolademasse, bekannt. Eine Regelung zur Einstellung des Temperiergrads ist diesem Dokument des Stands der Technik nicht zu entnehmen.

### BESCHREIBUNG DER ERFINDUNG

Die Erfindung betrifft ein Verfahren nach Anspruch 1.

Die Erfindung betrifft weiterhin eine Temperiermaschine nach Anspruch 10. In diesem Fall weist die Vorrichtung für jeden Verfahrensschritt Mittel zu dessen Durchführung auf.

Die Erfindung betrifft auch eine Software nach Anspruch 11 und ein Verfahren nach Anspruch 12.

Die folgenden Definitionen sind zu berücksichtigen:

### Temperierung

Unter der Temperierung der Süßwarenmasse wird die bekannte thermische Behandlung der Süßwarenmasse, insbesondere durch Abkühlen ggf. mit einer Nachbehandlung durch Mischung, Scherung, Bewegung und/oder Wiedererwärmung, verstanden.

Während und nach dem Abkühlen bilden sich in der Masse Kakaobutterkristalle. Die Masse ist jedoch weiterhin so flüssig, dass sie einer weiteren Verarbeitungsstation - z. B. einer Überziehmaschine oder einer Gießmaschine - zugeführt und dort verarbeitet werden kann.

### Temperiermaschine

Unter einer Temperiermaschine sind in dieser Anmeldung sämtliche Maschinen zur temperaturmäßigen Behandlung der in Rede stehenden Süßwarenmasse im Sinne der Bildung von Kristallen zu verstehen, d. h. auch andere Wärmetauscher, wie beispielsweise eine Vorkristallisationsmaschine.

### Temperiergrad

Der Temperiergrad einer temperierten Masse ist eine dimensionslose Kennzahl.

Mit einer geeigneten Vorrichtung wird der Temperiergrad - manchmal auch als Temperierindex bezeichnet - ermittelt, wobei dieser z. B. in einem Zahlenbereich von z. B. 1 bis 9 liegen kann. Bei dieser Art der Unterscheidung und Systematisierung des Temperiergrads handelt es sich um die Art, wie sie von der Anmelderin bevorzugt wird. Dies schließt jedoch nicht aus, dass es auch andere Möglichkeiten und Skalen gibt, um eine Aussage über den Temperiergrad zu machen bzw. diesen zu bestimmen.

Die für die Bestimmung des Temperiergrads ermittelte Abkühlkurve der untersuchten Masse weist aufgrund der Kristallbildung und der dabei freiwerdenden Wärme einen Wendepunkt auf. Die Steigung der Abkühlkurve der untersuchten Masse am Wendepunkt entspricht dabei dem Temperiergrad. Eine positive Steigung kennzeichnet eine untertemperierte Masse. Eine negative Steigung kennzeichnet eine übertemperierte Masse. Eine Steigung im Bereich um Null kennzeichnet in der Regel eine normal temperierte Masse.

Ein vergleichsweise hoher Temperiergrad bedeutet dabei, dass eine vergleichsweise große Anzahl möglichst stabiler Kristalle in der Masse vorhanden ist. Bei diesen stabilen Kristallen handelt es sich gemäß dem aktuellen Wissensstand um β(V)-Fettkristalle, die in einem Temperaturbereich um etwa 33 °C herum schmelzen.

### Messeinrichtung für die Ermittlung des Temperiergrads

Es gibt verschiedene Möglichkeiten zur Ermittlung des Temperiergrads. Eine dieser Möglichkeit ist der Einsatz eines Tempermeters, wie dieser beispielsweise in dem deutschen Patent DE 10 2004 021 135 der Anmelderin beschrieben ist.

Die Vorrichtung zur Ermittlung des Temperiergrads (Temperiergradistwerts) der temperierten Masse führt vorzugsweise in regelmäßigen Zeitabständen Messungen des Temperiergradistwerts der temperierten Masse in der Temperiermaschine durch und stellt den Messwert dann für eine weitere automatische Verarbeitung zur Verfügung.

Es ist jedoch ebenfalls möglich, einzelne Proben der temperierten Masse aus der Temperiermaschine oder auch später im Materialfluss zu entnehmen und den Temperiergrad in einer gesonderten Messeinrichtung zu bestimmen.

Die Erfindung lässt sich weiterhin wie folgt beschreiben:

### Wirkungsweise der Erfindung

Die Erfindung betrifft also eine neue Teach-in-Programmierung zur Vorbereitung einer bestimmten Temperiermaschine zur Temperierung einer bestimmten Süßwarenmasse, insbesondere Schokolademasse, derart, dass der Temperiergrad (Temperiergradsollwert) während des normalen Temperierbetriebs durch den Bediener direkt eingestellt werden kann. Diese Einstellung erfolgt dabei nicht durch eine vergleichsweise komplizierte Einstellung einzelner Regler für die Temperaturen und Mengen der Masse und der Temperiermedien, sondern durch Einstellung nur einer Größe, nämlich des Temperiergradsollwerts.

Das neue Anlernverfahren ist somit dem normalen Betrieb der Temperiermaschine vorangeschaltet und wird immer dann durchgeführt, wenn in dieser Temperiermaschine eine andere Masse temperiert werden soll und/oder sich andere Bedingungen wesentlich verändert haben. Für das Anlernverfahren müssen bestimmte Parameter des Temperierprozesses konstant gehalten werden. Diese konstanten Parameter sind die Temperatur und der Volumenstrom der Süßwarenmasse, mit denen diese in eine Kühlzone der Temperiermaschine eingebracht wird. Es versteht sich, dass die Parameter nicht streng konstant gehalten werden können und müssen, sondern dass gewisse Abweichungen akzeptabel bzw. unvermeidlich sind. Es ist jedoch bevorzugt, diese Parameter so konstant wie möglich zu halten. Ausgangspunkt für das Anlernverfahren ist eine betriebsbereite, aufgewärmte Temperiermaschine.

Die Süßwarenmasse wird dann durch die Kühlzone gefördert und dabei in bekannter Weise durch ein Kühlmedium gekühlt. Während nachfolgende Süßwarenmasse in gleicher Weise kontinuierlich in die Kühlzone der Temperiermaschine eingebracht wird, wird der Temperiergrad des Teils der Süßwarenmasse, der bereits die Kühlzone zumindest teilweise durchlaufen hat, bestimmt. Dies bedeutet nicht, dass diese Bestimmung unmittelbar nach der Kühlzone erfolgen muss. Der Temperiergrad kann auch an einer weiter stromabwärts liegenden Stelle ermittelt werden. Weiterhin ist es möglich, dass der Temperiergrad nicht streng nach der Kühlzone, sondern im Bereich der Kühlzone bestimmt wird. Dies ist insbesondere dann möglich, wenn die Kühlzone vergleichweise lang ausgebildet und/oder der Volumenstrom vergleichweise gering ist und der zu bestimmende Temperiergrad der Süßwarenmasse daher auch bereits stromaufwärts des Endes der Kühlzone ermittelt werden kann. Es können auch mehrere Kühlzonen aneinander anschließen oder so vorgesehen sein, dass zwischen ihnen andere Zonen vorgesehen sind. In diesem Fall erfolgt die Bestimmung des Temperiergrads jedenfalls im Wesentlichen nach der ersten Kühlzone an einer beliebigen Stelle stromabwärts.

Während also die Temperatur und der Volumenstrom der in die Kühlzone der Temperiermaschine eingebrachten Süßwarenmasse im Wesentlichen konstant gehalten werden, wird ein anderer Parameter der Temperiermaschine gemäß einer mathematischen Funktion automatisch über ein Zeitintervall geändert. Unter einer automatischen Änderung ist dabei nicht eine Einstellung des Parameters per Hand durch den Bediener, sondern insbesondere eine rechnergesteuerte automatisierte Einstellung zu verstehen. So wird der Parameter in definierter Weise über ein definierbares Zeitintervall verändert, um einen auswertbaren Einfluss auf den Temperiergrad der Süßwarenmasse zu nehmen. Es versteht sich, dass es sich bei diesem Parameter der Temperiermaschine um einen solchen Parameter handelt, der einen wesentlichen Einfluss auf den Temperiergrad der Süßwarenmasse hat.

In dem Zeitintervall wird nun der Temperiergrad der Süßwarenmasse nach der Kühlzone erneut bestimmt. Diese erneute Bestimmung kann einmalig, mehrmals, in kurzen zeitlichen Abständen, quasi-kontinuierlich und ggf. auch kontinuierlich erfolgen. Je häufiger der Temperiergrad in dem Zeitintervall bestimmt wird, desto genauer gibt dann das automatische Aufzeichnen des Verlaufs des Temperiergrads über den Parameter in dem Zeitintervall Aufschluss über die Temperiergradcharakteristik der anzulernenden Temperiermaschine mit der in ihr zu temperierenden Süßwarenmasse.

Der Parameter kann eine Temperatur und/oder ein Volumenstrom der Süßwarenmasse oder eines Kühlmediums der Temperiermaschine, insbesondere der Kühlzone oder einer Nachbehandlungszone der Temperiermaschine, sein. Diese automatisiert zu variierenden Parameter erlauben es in Kombination mit den konstant zu haltenden Parametern, einen aussagekräftigen Verlauf des Temperiergrads in dem Zeitintervall aufzuzeichnen und somit die für den späteren Normalbetrieb der Temperiermaschine erforderlichen Daten verlässlich bereitzustellen.

Der Parameter kann dabei insbesondere die Temperatur der Süßwarenmasse, die Temperatur des Kühlmediums der Kühlzone, der Volumenstrom einer vorkristallisierten Masse, die der Süßwarenmasse zugeführt wird, der Volumenstrom eines Teilstroms der Süßwarenmasse, der Volumenstrom des Kühlmediums der Kühlzone, der Volumenstrom eines Teilstroms des Kühlmediums der Kühlzone und/oder der Volumenstrom eines Teilstroms des Kühlmediums eines Teils der Kühlzone sein. Dabei ist es bevorzugt, dass der Parameter genau einer der genannten Parameter ist und die anderen Parameter, sofern vorhanden, konstant gehalten werden.

Der Parameter ist vorzugsweise die Temperatur der Süßwarenmasse, wobei diese in dem Zeitintervall in etwa linear gesenkt wird. Dies kann insbesondere dadurch erreicht werden, dass der Volumenstrom des Kühlmediums der Kühlzone in etwa exponentiell vergrößert wird. Dabei wird die Temperatur des Kühlmediums der Kühlzone, insbesondere Wasser, auf einen festen Wert eingestellt, beispielsweise auf 10 °C. Aus der exponentiellen Vergrößerung des Volumenstroms des Kühlmediums der Kühlzone resultiert die lineare Absenkung der Temperatur der Süßwarenmasse und somit eine Vergrößerung des Temperiergrads, die automatisch aufgezeichnet wird. Das Zeitintervall endet dann bevorzugt, wenn der Temperiergrad nicht mehr ansteigt, sondern annähernd konstant bleibt. Gemäß der von der Anmelderin verwendeten Definition des Temperiergrads bleibt dieser bei Erreichen einer Größe von zwischen etwa 7 bis 8 konstant. Je nach den weiteren Bedingungen wird dieser konstante Temperiergrad innerhalb eines Zeitintervalls von zwischen etwa 1 Stunde und 3 Stunden, insbesondere von etwa 2 Stunden, erreicht.

Das Bestimmen des Temperiergrads der Süßwarenmasse kann dabei etwa alle 5 bis 15 Minuten, insbesondere etwa alle 10 bis 15 Minuten, automatisch in dem Zeitintervall wiederholt werden. Diese Zeitspanne ist einerseits lang genug, um den Temperiergrad verlässlich bestimmen zu können, und andererseits kurz genug, um die gewünschte Genauigkeit beim Aufzeichnen des Verlaufs des Temperiergrads über den Parameter in dem Zeitintervall zu erhalten. Kürzere und längere Zeitabstände zwischen den Messungen sind ebenfalls möglich. Sofern eine kontinuierliche oder quasi-kontinuierliche Bestimmung des Temperiergrads messtechnisch möglich ist, kann dieser Verfahrensschritt auch kontinuierlich bzw. quasi-kontinuierlich durchgeführt werden.

Die Süßwarenmasse kann zu Beginn des Verfahrens beim Einbringen in die Kühlzone der Temperiermaschine eine für die jeweilige Süßwarenmasse vergleichsweise hohe Temperatur besitzen, die sicherstellt, dass im Wesentlichen keine Kristalle in der Süßwarenmasse vorhanden sind. Hierdurch wird sichergestellt, dass der Verlauf des Temperiergrads exakt und unabhängig davon bestimmt wird, wie viele Kristalle zuvor in der Süßwarenmasse vorhanden waren. Es werden also auch hierdurch gleichmäßige und vergleichbare Ausgangsbedingungen bereitgestellt. Je nach Art der Schokolademasse liegt diese Temperatur bei etwa 36 °C oder höher, wobei zur Erreichung einer solchen Temperatur der Süßwarenmasse die Temperatur des Kühlmediums in der Kühlzone z. B. insbesondere auf etwa 42 °C eingestellt wird.

Die neue Vorrichtung zum Anlernen der Temperiermaschine für die direkte Einstellbarkeit eines Temperiergrads der in der Temperiermaschine zu temperierenden Süßwarenmasse weist eine Regeleinrichtung auf, mit der das Anlernverfahren durchgeführt werden kann. Die Regeleinrichtung arbeitet mit einer Temperiergradmessvorrichtung, insbesondere einem Tempermeter, zusammen. Die Regelung kann eine Visualisierung aufweisen, deren Prozessor den Ablauf des Anlernverfahrens regelt, sowie eine speicherprogrammierbare Steuerung (SPS), die die Verbindung zur physikalischen Umgebung übernimmt.

Die neue Software ist zur Durchführung des erfindungsgemäßen Verfahrens, insbesondere auf einer erfindungsgemäßen Temperiermaschine mit der erfindungsgemäßen Vorrichtung, ausgebildet. Die Software arbeitet dabei mit der speicherprogrammierbaren Steuerung zusammen, die wiederum die entsprechende maschinelle Einstellung von Ventilen, Pumpen usw. übernimmt. Sofern eine bereits bestehende Temperiermaschine vorrichtungsmäßig für die Durchführung des Verfahrens geeignet ist, indem sie beispielsweise automatisch regelbare Ventile besitzt, kann die Software auch auf eine solche bereits bestehende Temperiermaschine aufgespielt werden. Dies erfolgt dann mit der erfindungsgemäßen Programmierung der Temperiermaschine. Weiterhin ist es möglich, bestehende Temperiermaschinen so umzurüsten, dass sie mit der erfindungsgemäßen Software programmiert und dann im Sinne des neuen Anlernverfahrens betrieben werden können.

Nachdem das Anlernverfahren abgeschlossen wurde, wird die Temperiermaschine insbesondere in der automatisch geregelten Weise zur Temperierung von Süßwarenmasse betrieben, wie dies in der deutschen Patentanmeldung DE 10 2009 011 969 A1 der Anmelderin beschrieben ist. Auf das dort offenbarte Regelungsverfahren wird hiermit vollumfänglich Bezug genommen, insbesondere auf die Absätze 7 bis 18, in denen beschrieben ist, wie das automatisierte Regelungsverfahren im Sinne des Konstanthaltens des Temperiergrads während des normalen Temperierbetriebs erreicht wird. Dabei basiert die dort beschriebene Regelung auf den Ergebnissen des in der vorliegenden Anmeldung durchgeführten Anlernverfahrens.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den abhängigen Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Kühlzone die Rede ist, ist dies so zu verstehen, dass genau eine Kühlzone, zwei Kühlzonen oder mehr Kühlzonen vorhanden sind. Wenn hingegen nur die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Ansicht einer Temperiermaschine mit einer Vorrichtung zum Anlernen der Temperiermaschine für die direkte Einstellbarkeit eines Temperiergrads der in der Temperiermaschine zu temperierenden Süßwarenmasse.
- **Fig. 2**: zeigt eine schematische Ansicht einer Vorrichtung zum Anlernen der Temperiermaschine.
- **Fig. 3**: zeigt den Verlauf der Temperaturen verschiedener Medien und der Süßwarenmasse in der Temperiermaschine über die Zeit.
- **Fig. 4**: zeigt den Verlauf der Temperaturen gemäß Fig. 3 in dem Zeitintervall sowie den dort gemessenen Temperiergrad in einer vergrößerten Darstellung.
- **Fig. 5**: zeigt eine teilweise geschnittene Ansicht einer ersten konkreten beispielhaften Ausführungsform der Temperiermaschine.
- **Fig. 6**: zeigt eine teilweise geschnittene Ansicht einer zweiten konkreten beispielhaften Ausführungsform der Temperiermaschine.
- **Fig. 7**: zeigt eine teilweise geschnittene Ansicht einer dritten konkreten beispielhaften Ausführungsform der Temperiermaschine.
- **Fig. 8**: zeigt eine Schnittansicht einer beispielhaften konkreten Ausführungsform einer Vorrichtung zur Ermittlung des Temperiergrads.

### FIGURENBESCHREIBUNG

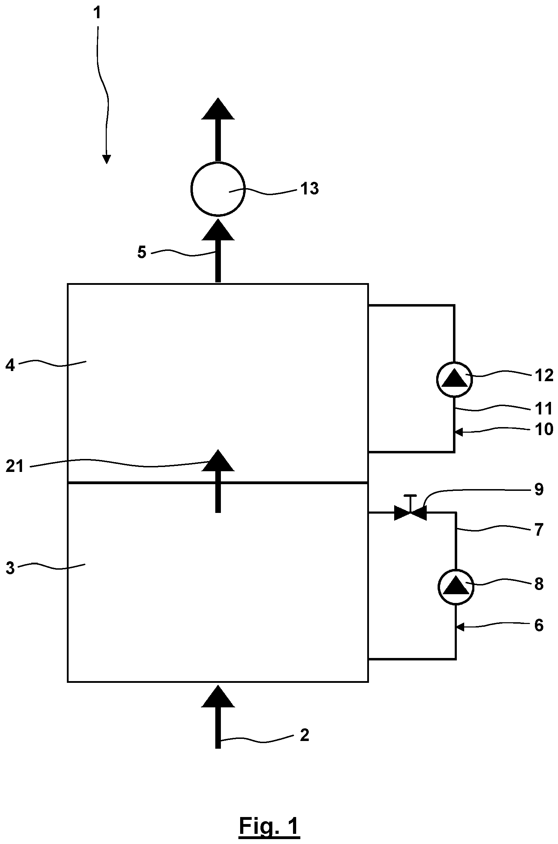

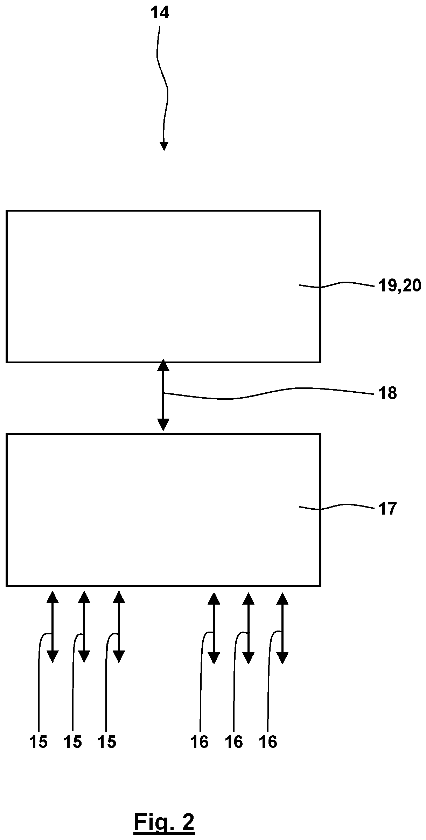

**Fig. 1** zeigt eine schematische Ansicht einer Temperiermaschine 1 für die Temperierung einer Süßwarenmasse in ihrer Grundfunktionalität. Weitere Details sind in den Figuren 2 bis 8 dargestellt.

### Aufbau

Der grundsätzliche Aufbau einer Temperiermaschine ist dem Fachmann bekannt und wird daher im Folgenden nur teilweise beschrieben.

Die Temperiermaschine 1 weist einen Masseeingang 2 auf, über den Süßwarenmasse in die Temperiermaschine 1 über eine Rohrleitung und eine Pumpe (nicht dargestellt) eingebracht wird.

Die Temperiermaschine 1 weist weiterhin eine Kühlzone 3 und eine Nachbehandlungszone 4 auf. Die Kühlzone 3 weist einen Ausgang 21 auf. Am Ende der Nachbehandlungszone 4 ist ein Masseausgang 5 vorgesehen.

Die Kühlzone 3 weist einen Kühlkreislauf 6 mit Leitungen 7, einer Pumpe 8 und einem Ventil 9 auf. Kühlmedium zum Kühlen der Süßwarenmasse in der Kühlzone 3 fließt durch den Kühlkreislauf 6.

Die Nachbehandlungszone 4 weist in vergleichbarer Weise einen Nachbehandlungskreislauf 10 mit Leitungen 11 und einer Pumpe 12 auf. Durch den Nachbehandlungskreislauf 10 fließt ebenfalls ein Temperiermedium, wobei dieses nicht unbedingt zum Kühlen dient, sondern z. B. auch zum Erwärmen oder zum Konstanthalten der Temperatur der durch die Nachbehandlungszone 4 fließenden Süßwarenmasse dienen kann. Sowohl bei dem Kühlmedium als auch bei dem Nachbehandlungsmedium kann es sich insbesondere um Wasser handeln. Die Nachbehandlungszone 4 dient z. B. zum Nachbehandeln der Süßwarenmasse durch Mischung, Scherung, Bewegung und/oder Wiedererwärmung.

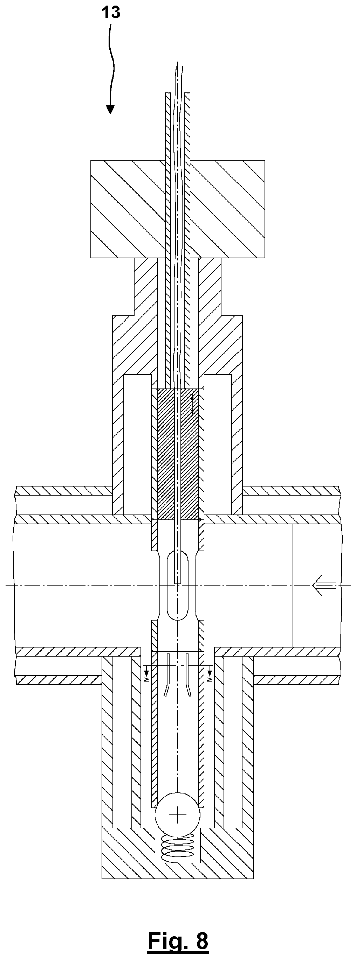

Stromabwärts des Masseausgangs 5 ist eine Vorrichtung 13 zur Bestimmung des Temperiergrads der Süßwarenmasse angeordnet. Bei der Vorrichtung 13 kann es sich insbesondere um ein Tempermeter (siehe auch Fig. 8) handeln.

**Fig. 2** zeigt den Aufbau einer Vorrichtung 14 zum Anlernen der Temperiermaschine 1 für die direkte Einstellbarkeit des Temperiergrads der in der Temperiermaschine 1 zu temperierenden Süßwarenmasse. Die Vorrichtung 14 ist Teil der in Fig. 1 dargestellten Temperiermaschine 1 und ist mit dieser über digitale Ein- und Ausgänge 15 und analoge Ein- und Ausgänge 16 verbunden.

Die Vorrichtung 14 weist eine speicherprogrammierbare Steuerung (SPS) 17 auf, die über eine Kommunikationsschnittstelle 18 mit einer Visualisierung 19 mit einem Prozessor 20 verbunden ist.

Im Folgenden wird nun der Betrieb der Temperiermaschine 1 während des erfindungsgemäßen Anlernverfahrens genauer beschrieben:

### Funktionsweise

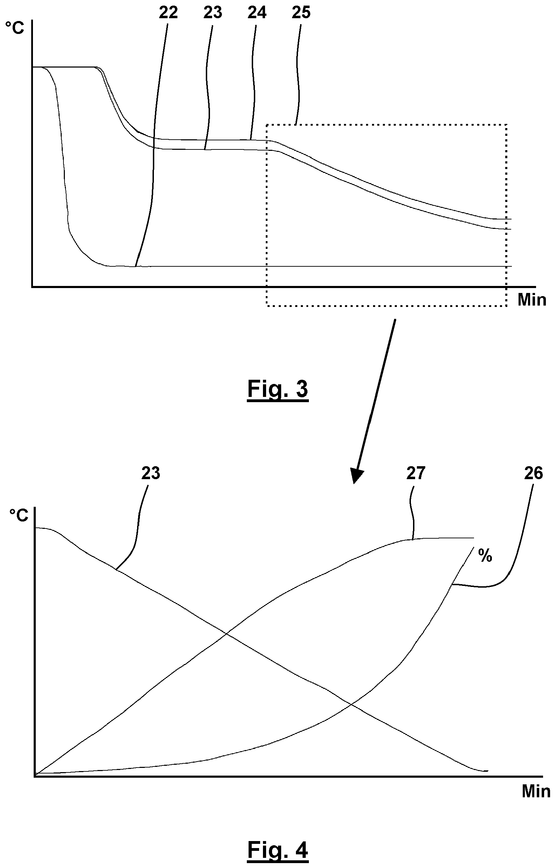

Ausgangspunkt für das Anlernverfahren ist eine betriebsbereite, aufgewärmte Temperiermaschine 1. Zu Beginn des Anlernverfahrens wird insbesondere solche Süßwarenmasse dem Masseeingang 2 und somit der Kühlzone 3 zugeführt, die keine oder zumindest im Wesentlichen keine Kristalle enthält. Die Temperatur 22 des Kühlmediums des Kühlkreislaufs 6 (siehe Fig. 3) wird dann auf einen festen Wert, beispielsweise 10 °C, eingestellt und dessen Volumenstrom 26 (siehe Fig. 4) über die Pumpe 8 und das Ventil 9 zunächst so klein gewählt, dass sich eine Temperatur 23 der Süßwarenmasse ergibt, in der noch keine Kristallbildung erfolgt, d. h. eine vergleichsweise hohe Temperatur (siehe Fig. 3).

Die Temperatur 24 des Nachbehandlungsmedium in der Nachbehandlungszone 4 (siehe Fig. 3) kann dann der Temperatur 23 der Süßwarenmasse am Ausgang 21 der Kühlzone 3 in einem festen Abstand (beispielsweise etwa + 1 °C oberhalb der Temperatur 23 der Süßwarenmasse am Ausgang 21 der Kühlzone 3) automatisch geregelt nachgeführt werden.

Nach dem Durchlaufen der Kühlzone 3 durch die Süßwarenmasse wird der Temperiergrad 27 der Süßwarenmasse (siehe Fig. 4) in regelmäßigen Abständen bestimmt und dessen Verlauf automatisch aufgezeichnet. Dies geschieht im Wesentlichen nach der Kühlzone 3, beispielsweise unmittelbar nach der Kühlzone 3, oder auch bevorzugt - wie in Fig. 1 dargestellt - erst nach der Nachbehandlungszone 4. Dort liegt dann bereits der im Wesentlichen endgültige Temperiergrad 27 vor. Der Temperiergrad 27 der Süßwarenmasse wird vorzugsweise bestimmt, indem eine definierte Menge Süßwarenmasse aus dem Massefluss entnommen und dann hinsichtlich des Temperiergrads untersucht wird.

Sobald sich die Temperatur 23 der Süßwarenmasse am Ausgang 21 der Kühlzone 3 stabilisiert hat, wird der Volumenstrom 26 (oder ein Volumenteilstrom) des Kühlmediums der Kühlzone 3 (oder eines Teils der Kühlzone 3) gemäß einer mathematischen Funktion erhöht, so dass sich die Temperatur 23 der Süßwarenmasse am Ausgang 21 der Kühlzone 3 absenkt. Vorzugsweise wird der Volumenstrom 26 des Kühlmediums exponentiell vergrößert, woraus sich eine in etwa lineare Absenkung der Temperatur 23 der Süßwarenmasse ergibt. Wie oberhalb beschrieben wurde, wird die Temperatur 24 des Nachbehandlungsmediums der Nachbehandlungszone 4 weiterhin der Temperatur 23 der Süßwarenmasse am Ausgang 21 der Kühlzone 3 nachgeführt.

Während dieses Vorgangs wird insbesondere die Temperatur 23 der Süßwarenmasse am Ausgang 21 der Kühlzone 3, der Öffnungsgrad des Ventils 9 für die Einstellung des Volumenstroms 26 des Kühlmediums und der Temperiergrad 27 der Süßwarenmasse aufgezeichnet. Das Anlernverfahren wird insbesondere dann beendet, wenn ein bestimmter Temperiergrad 27 erreicht wurde oder kein Anstieg des Temperiergrads 27 trotz Erhöhung des Volumenstroms 26 des Kühlmediums mehr festzustellen ist.

Die ermittelten Parameter werden dann verwendet, um den Temperiergrad der Süßwarenmasse im normalen Temperierbetrieb der Temperiermaschine 1 durch einfache Einstellung zahlenmäßig durch den Maschinenbediener zu wählen und konstant halten zu können.

**Fig. 3** zeigt einen beispielhaften Verlauf der Temperaturen verschiedener Medien und der Süßwarenmasse in der Temperiermaschine 1 über die Zeit. Fig. 3 zeigt dabei in ihrem unteren Bereich den Verlauf der Temperatur 22 des Kühlmediums über die Zeit. Es ist erkennbar, dass die vergleichweise geringe Temperatur 22 nach einer gewissen Einlaufzeit erreicht und dann konstant gehalten wird.

Oberhalb dieser Kurve ist die Temperatur 23 der Süßwarenmasse am Ausgang 21 der Kühlzone 3 dargestellt. Auch hier ist erkennbar, dass diese nach einer gewissen Einlaufzeit einen bestimmten Verlauf nimmt, der weiter unterhalb in Bezug auf Fig. 4 näher beschrieben wird. Bei der obersten Kurve handelt es sich um die Temperatur 24 des Nachbehandlungsmediums in der Nachbehandlungszone 4. Der in Fig. 3 gestrichelt dargestellte Ausschnitt stellt das Zeitintervall 25 dar, innerhalb dessen der Verlauf des Temperiergrads 27 über den bzw. die Parameter automatisch aufgezeichnet wird.

**Fig. 4** zeigt nun zusätzlich den Volumenstrom 26 des Kühlmediums in der Kühlzone 3 in Prozent - wobei 100 % dem maximal möglichen Durchfluss entsprechen - sowie den in dem Zeitintervall 25 bestimmten Temperiergrad 27. Es ist erkennbar, dass bei der durch die in etwa hyperbolische Vergrößerung des Volumenstroms 26 des Kühlmediums ereichten in etwa linearen Absenkung der Temperatur 23 der Süßwarenmasse ein in etwa linear ansteigender Temperiergrad 27 erzielt wird. Am Ende des Zeitintervalls 25 flacht dann die Steigung des Temperiergrads 27 ab und dieser nähert sich einem konstanten Wert. Dieser Bereich stellt dann das zeitliche Ende des Zeitintervalls 25 dar.

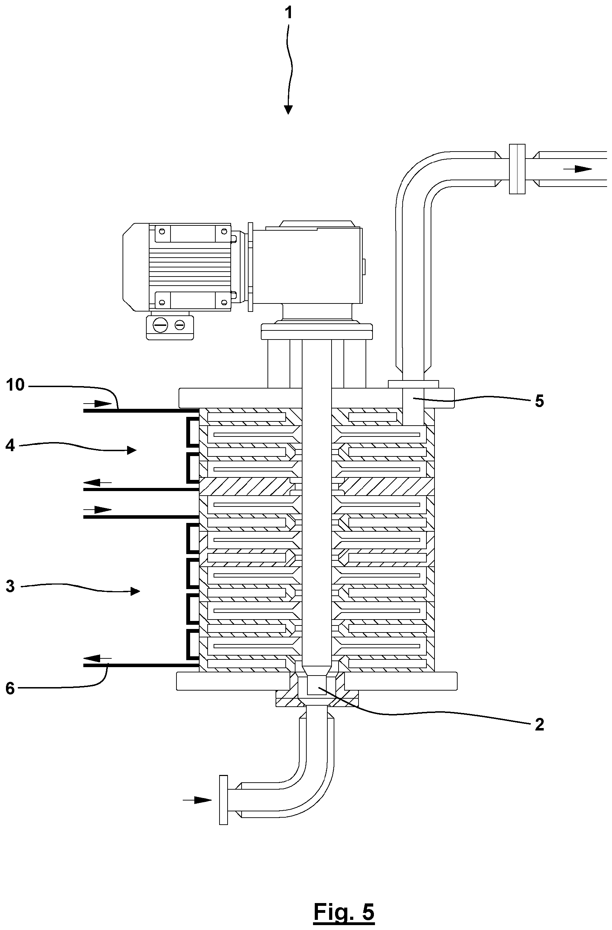

**Fig. 5** zeigt nun weitere Details einer möglichen konkreten Ausführungsform der Temperiermaschine 1. Da der grundsätzliche Aufbau einer Temperiermaschine mit Rohrleitungen, Pumpen, Massekammern, Temperierkammern, Rührwerk, Antrieb usw. dem Fachmann gut geläufig sind, werden diese Details im Folgenden nicht weiter beschrieben.

Fig. 5 zeigt eine Ausführungsform der Temperiermaschine 1, bei der die Kühlzone 3 mit dem Kühlkreislauf 6 und die Nachbehandlungszone 4 mit dem Nachbehandlungskreislauf 10 vorhanden sind.

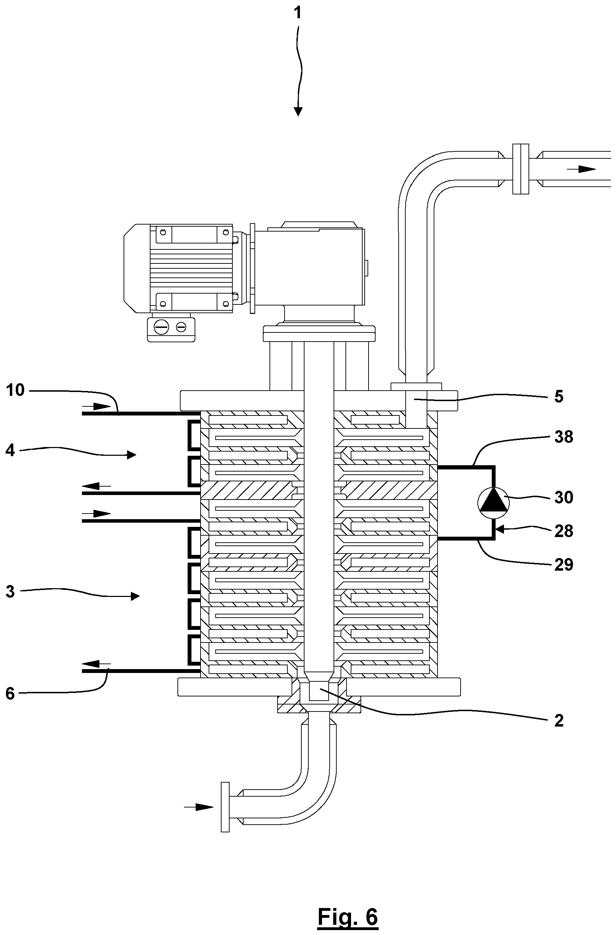

Zusätzlich zu der Ausführungsform der Temperiermaschine 1 gemäß Fig. 5 weist die in **Fig. 6** dargestellte Ausführungsform der Temperiermaschine 1 einen Bypass 28 mit einer Bypassleitung 29 und einer Bypasspumpe 30 auf. Über den Bypass 28 wird Süßwarenmasse vor dem Erreichen des Endes der Kühlzone 3 der Nachbehandlungszone 4 zugeführt. Diese Süßwarenmasse wurde also weniger gekühlt und weist daher weniger Kristalle als der andere Teil der Süßwarenmasse auf. In dieser Weise kann die Kristallbildung in der Süßwarenmasse und somit der Temperiergrad 27 geregelt werden. In diesem Sinne kann also der Volumenstrom 38 des durch den Bypass 28 geführten Teilstroms der Süßwarenmasse als der Parameter genutzt werden, der bei dem erfindungsgemäßen Anlernverfahren automatisch gemäß einer mathematischen Funktion geändert wird.

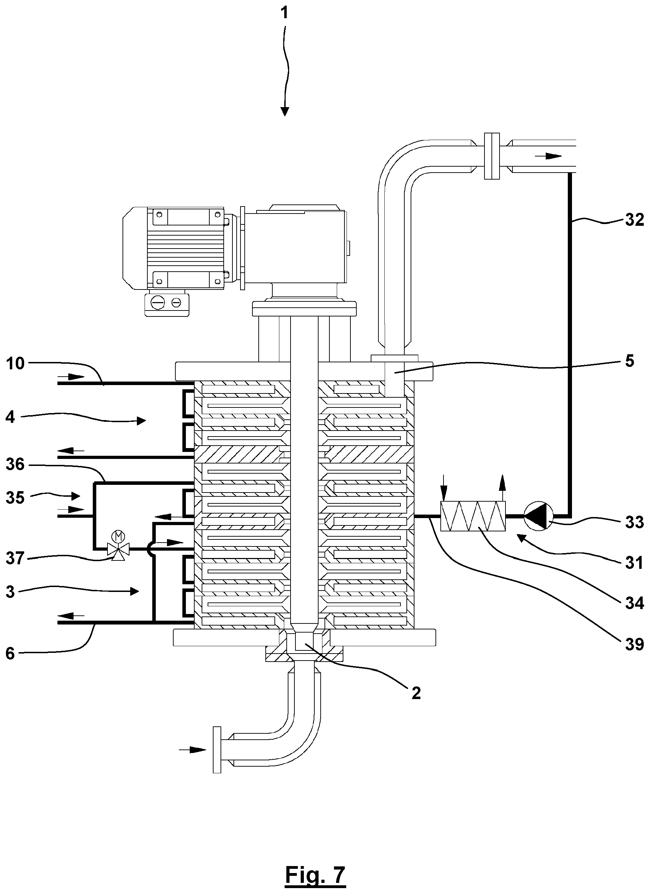

**Fig. 7** zeigt eine weitere Ausführungsform der Temperiermaschine 1, bei der als zu variierender Parameter der Volumenstrom 39 einer vorkristallisierten Masse verwendet wird, die der Süßwarenmasse zugeführt wird. Hierfür weist die Temperiermaschine 1 eine Vorkristallisationszone 31 mit einer Leitung 32, einer Pumpe 33 und einem Wärmetauscher 34 auf.

Für die Vorkristallisation wird temperierte Süßwarenmasse nach der Nachbehandlungszone 4 über die Rohrleitung 32 entnommen und mittels der Pumpe 33 dem Wärmetauscher 34 zugeführt. Mittels des Wärmetauschers 34 wird der Süßwarenmasse Wärmeenergie entzogen, so dass sich weitere Kristalle in der Süßwarenmasse bilden. Diese vorkristallisierte Süßwarenmasse wird dann der nicht vorkristallisierten Süßwarenmasse zugeführt. Eine derartige Behandlung wird auch als Impfkristallisation bezeichnet und dient insbesondere dazu, den Anteil von β(V)-Fettkristallen in der Süßwarenmasse zu erhöhen. Damit diese Kristalle beim Zuführen in die Süßwarenmasse nicht aufgeschmolzen werden, wird die vorkristallisierte Süßwarenmasse einer hier vorhandenen Kristallisationszone 35 zugeführt. Die Kristallisationszone 35 weist einen Kristallisationskreislauf 36 auf. Weiterhin ist ein motorgesteuert regelbares Ventil 37 vorgesehen, über welches der Volumenstrom 26 des in den Kühlkreislauf 6 eintretenden Kühlmediums geregelt werden kann. In dieser Weise lassen sich die Temperaturen in der Kühlzone 3 und der Kristallisationszone 35 regeln.

**Fig. 8** zeigt schließlich eine konkrete Ausgestaltung einer Vorrichtung 13 zur Bestimmung des Temperiergrads 27 der in der Temperiermaschine 1 zu temperierenden Süßwarenmasse. Diese Ausführungsform der Vorrichtung 13 wird auch als Tempermeter bezeichnet und ist ausführlich in der deutschen Patentanmeldung DE 10 2004 021 135 A1 der Anmelderin beschrieben. Es wird diesbezüglich auf die dortige Fig. 1 und die diesbezügliche Beschreibung in Absatz 20 bis Absatz 26 verwiesen.

### BEZUGSZEICHENLISTE

- 1: Temperiermaschine
- 2: Masseeingang
- 3: Kühlzone
- 4: Nachbehandlungszone
- 5: Masseausgang
- 6: Kühlkreislauf
- 7: Leitung
- 8: Pumpe
- 9: Ventil
- 10: Nachbehandlungskreislauf
- 11: Leitung
- 12: Pumpe
- 13: Vorrichtung
- 14: Vorrichtung
- 15: digitale Ein- und Ausgänge
- 16: analoge Ein- und Ausgänge
- 17: SPS
- 18: Kommunikationsschnittstelle
- 19: Visualisierung
- 20: Prozessor
- 21: Ausgang
- 22: Temperatur des Kühlmediums in der Kühlzone
- 23: Temperatur der Süßwarenmasse am Ausgang der Kühlzone
- 24: Temperatur des Nachbehandlungsmediums in der Nachbehandlungszone
- 25: Zeitintervall
- 26: Volumenstrom des Kühlmediums in der Kühlzone
- 27: Temperiergrad
- 28: Bypass
- 29: Bypassleitung
- 30: Bypasspumpe
- 31: Vorkristallisationszone
- 32: Leitung
- 33: Pumpe
- 34: Wärmetauscher
- 35: Kristallisationszone
- 36: Kristallisationskreislauf
- 37: Ventil
- 38: Volumenstrom eines durch den Bypass geführten Teilstroms
- 39: Volumenstrom einer vorkristallisierten Masse

## Patentansprüche

1. Verfahren zum Anlernen einer Temperiermaschine (1) für die direkte Einstellbarkeit eines Temperiergrads (27) einer in der Temperiermaschine (1) zu temperierenden Süßwarenmasse, mit den Schritten:
Einbringen der Süßwarenmasse mit im Wesentlichen konstanter Temperatur und im Wesentlichen konstantem Volumenstrom in eine Kühlzone (3) der Temperiermaschine (1),
Fördern der Süßwarenmasse durch die Kühlzone (3),
Bestimmen des Temperiergrads (27) der Süßwarenmasse nach der Kühlzone (3) unter fortgesetztem Einbringen der Süßwarenmasse mit im Wesentlichen konstanter Temperatur und im Wesentlichen konstantem Volumenstrom in die Kühlzone (3) der Temperiermaschine (1),
danach: automatisches Ändern eines Parameters der Temperiermaschine (1) gemäß einer mathematischen Funktion über ein Zeitintervall (25),
danach: erneutes Bestimmen des Temperiergrads (27) der Süßwarenmasse nach der Kühlzone (3) in dem Zeitintervall (25), und
danach: automatisches Aufzeichnen des Verlaufs des Temperiergrads (27) über den Parameter in dem Zeitintervall (25).

2. Verfahren nach Anspruch 1, **dadurch gekennzeichnet, dass** der Parameter eine Temperatur und/oder ein Volumenstrom der Süßwarenmasse oder eines Kühlmediums der Temperiermaschine (1), insbesondere der Kühlzone (3) oder einer Nachbehandlungszone (4) der Temperiermaschine (1), ist.

3. Verfahren nach Anspruch 1 oder 2, **dadurch gekennzeichnet, dass** der Parameter
die Temperatur (23) der Süßwarenmasse,
die Temperatur (22) des Kühlmediums der Kühlzone (3),
der Volumenstrom (39) einer vorkristallisierten Masse, die der Süßwarenmasse zugeführt wird,
der Volumenstrom (38) eines Teilstroms der Süßwarenmasse,
der Volumenstrom (26) des Kühlmediums der Kühlzone (3),
der Volumenstrom eines Teilstroms des Kühlmediums der Kühlzone (3), und/oder,
der Volumenstrom eines Teilstroms des Kühlmediums eines Teils der Kühlzone (3) ist.

4. Verfahren nach Anspruch 3, **dadurch gekennzeichnet, dass** der Parameter genau einer der genannten Parameter ist und die anderen Parameter, sofern vorhanden, konstant gehalten werden.

5. Verfahren nach mindestens einem der vorhergehenden Ansprüche, **dadurch gekennzeichnet, dass** der Parameter die Temperatur (23) der Süßwarenmasse ist und diese in dem Zeitintervall (25) in etwa linear gesenkt wird.

6. Verfahren nach Anspruch 5, soweit dieser nicht auf Anspruch 4 rückbezogen ist, **dadurch gekennzeichnet, dass** die Temperatur (23) der Süßwarenmasse in dem Zeitintervall (25) in etwa linear gesenkt wird, indem der Volumenstrom (26) des Kühlmediums der Kühlzone (3) in etwa exponentiell vergrößert wird.

7. Verfahren nach mindestens einem der vorhergehenden Ansprüche, **dadurch gekennzeichnet, dass** das Zeitintervall (25) endet, wenn der Temperiergrad (27) annähernd konstant ist.

8. Verfahren nach mindestens einem der vorhergehenden Ansprüche, **dadurch gekennzeichnet, dass** das Bestimmen des Temperiergrads (27) der Süßwarenmasse nach der Kühlzone (3) in dem Zeitintervall (25) etwa alle 5 bis 15 Minuten automatisch wiederholt wird.

9. Verfahren nach mindestens einem der vorhergehenden Ansprüche, **dadurch gekennzeichnet, dass** die Süßwarenmasse zu Beginn des Verfahrens beim Einbringen in die Kühlzone (3) der Temperiermaschine (1) eine für die jeweilige Süßwarenmasse vergleichsweise hohe Temperatur besitzt, die sicherstellt, dass keine Kristalle in der Süßwarenmasse vorhanden sind.

10. Temperiermaschine (1) zum Temperieren einer Süßwarenmasse, mit
einer Vorrichtung (13) zur Bestimmung des Temperiergrads (27) der in der Temperiermaschine (1) zu temperierenden Süßwarenmasse, **gekennzeichnet durch**
eine Vorrichtung (14) zum Anlernen der Temperiermaschine (1) für die direkte Einstellbarkeit eines Temperiergrads (27) der in der Temperiermaschine (1) zu temperierenden Süßwarenmasse, wobei die Vorrichtung zur Durchführung des Verfahrens nach mindestens einem der Ansprüche 1 bis 9 ausgebildet ist und dafür eine Software und eine speicherprogrammierbare Steuerung (17) zur Ausführung der Software aufweist.

11. Software mit Befehlen, bei deren Ausführung durch eine speicherprogrammierbare Steuerung (17) die speicherprogrammierbare Steuerung (17) veranlasst wird, das Verfahren nach mindestens einem der Ansprüche 1 bis 9, insbesondere in einer Temperiermaschine (1) nach Anspruch 10, auszuführen.

12. Verfahren zur Einstellung oder Umrüstung einer Temperiermaschine (1) zur Durchführung des Verfahrens nach mindestens einem der Ansprüche 1 bis 9 mittels der Software nach Anspruch 11.

## Claims

1. A method of teaching a tempering machine (1) for the direct adjustability of a tempering degree (27) of a confectionary mass to be tempered in the tempering machine (1), comprising the steps of:
introducing the confectionary mass into a cooling zone (3) of the tempering machine (1) at a substantially constant temperature and at a substantially constant volume flow,
conveying the confectionary mass through the cooling zone (3),
determining the tempering degree (27) of the confectionary mass after the cooling zone (3) while continuing introduction of the confectionary mass into the cooling zone (3) of the tempering machine (1) at a substantially constant temperature and at a substantially constant volume flow,
afterwards: automatically changing a parameter of the tempering machine (1) during a time interval (25) according to a mathematical function,
afterwards: again determining the tempering degree (27) of the confectionary mass after the cooling zone (3) within the time interval (25), and
afterwards: automatically recording the course of the tempering degree (27) over the parameter within the time interval (25).

2. The method of claim 1, **characterised in that** the parameter is a temperature and/or a volume flow of the confectionary mass or of a cooling medium of the tempering machine (1), especially of the cooling zone (3) or of a post treatment zone (4) of the tempering machine (1).

3. The method of claim 1 or 2, **characterised in that** the parameter is:
the temperature (23) of the confectionary mass,
the temperature (22) of the cooling medium of the cooling zone (3),
the volume flow (39) of a pre-crystallized mass being fed to the confectionary mass,
the volume flow (38) of a partial flow of the confectionary mass,
the volume flow (26) of the cooling medium of the cooling zone (3),
the volume flow of a partial flow of the cooling medium of the cooling zone (3), and/or
the volume flow of a partial flow of the cooling medium of a part of cooling zone (3).

4. The method of claim 3, **characterised in that** the parameter is exactly one of the mentioned parameters and that the other parameters, if they exist, are kept constant.

5. The method of at least one of the preceding claims, **characterised in that** the parameter is the temperature (23) of the confectionary mass and that this temperature (23) is reduced approximately linearly within the time interval (25).

6. The method of claim 5 as far as not referring to claim 4, **characterised in that** the temperature (23) of the confectionary mass is reduced approximately linearly within the time interval (25) by the volume flow (26) of the cooling medium of the cooling zone (3) being increased approximately exponentially.

7. The method of at least one of the preceding claims, **characterised in that** the time interval (25) ends when the tempering degree (27) is approximately constant.

8. The method of at least one of the preceding claims, **characterised in that** determining the tempering degree (27) of the confectionary mass after the cooling zone (3) within the time interval (25) is automatically repeated approximately every 5 to 15 minutes.

9. The method of at least one of the preceding claims, **characterised in that**, at the beginning of the method, the confectionary mass when being introduced into the cooling zone (3) of the tempering machine (1) has a temperature being comparatively high for the respective confectionary mass to ensure that no crystals exist in the confectionary mass.

10. A tempering machine (1) for tempering a confectionery mass, comprising:
an apparatus (13) for determining the tempering degree (27) of the confectionary mass to be tempered in the tempering machine (1), **characterised by**
and apparatus (14) for teaching the tempering machine (1) for the direct adjustability of a tempering degree (27) of the confectionary mass to be tempered in the tempering machine (1), the apparatus being designed to conduct the method of at least one of claims 1 to 9 and for this purpose including a software and a programmable logic controller (17) for executing the software.

11. A software including commands the execution of which by a programmable logic controller (17) causes the programmable logic controller (17) to conduct the method of at least one of claims 1 to 9, especially in a tempering machine (1) of claim 10.

12. A method for adjusting or modifying a tempering machine (1) for conducting the method of at least one of claims 1 to 9 by the software of claim 11.

## Revendications

1. Procédé d'apprentissage d'un thermorégulateur (1) pour la capacité de réglage direct d'un degré de thermorégulation (27) d'une masse de sucreries à thermoréguler dans le thermorégulateur (1), avec les étapes suivantes:
insertion de la masse de sucreries avec une température globalement constante et un débit volumique globalement constant dans une zone de refroidissement (3) du thermorégulateur (1),
convoyage de la masse de sucreries à travers la zone de refroidissement (3),
détermination du degré de thermorégulation (27) de la masse de sucreries après la zone de refroidissement (3) en continuant d'insérer la masse de sucreries avec une température globalement constante et un débit volumique globalement constant dans la zone de refroidissement (3) du thermorégulateur (1),
ensuite: modification automatique d'un paramètre du thermorégulateur (1) selon une fonction mathématique sur un intervalle de temps (25),
ensuite: nouvelle détermination du degré de thermorégulation (27) de la masse de sucreries après la zone de refroidissement (3) dans l'intervalle de temps (25) et
ensuite: enregistrement automatique de l'évolution du degré de thermorégulation (27) par l'intermédiaire du paramètre dans l'intervalle de temps (25).

2. Procédé selon la revendication 1, **caractérisé en ce que** le paramètre est une température et/ou un débit volumique de la masse de sucreries ou un d'un fluide de refroidissement du thermorégulateur (1), plus particulièrement de la zone de refroidissement (3) ou d'une zone de post-traitement (4) du thermorégulateur (1).

3. Procédé selon la revendication 1 ou 2, **caractérisé en ce que** le paramètre est
la température (23) de la masse de sucreries,
la température (22) du fluide de refroidissement de la zone de refroidissement (3),
le débit volumique (39) d'une masse pré-cristallisée, qui est introduite dans la masse de sucreries,
le débit volumique (38) d'un flux partiel de la masse de sucreries,
le débit volumique (26) du fluide de refroidissement de la zone de refroidissement (3),
le débit volumique d'un flux partiel du fluide de refroidissement de la zone de refroidissement (3) et/ou
le débit volumique d'un flux partiel du fluide de refroidissement d'une partie de la zone de refroidissement (3).

4. Procédé selon la revendication 3, **caractérisé en ce que** le paramètre est exactement un des paramètres mentionnés et les autres paramètres, s'ils existent, sont maintenus constants.

5. Procédé selon au moins l'une des revendications précédentes, **caractérisé en ce que** le paramètre est la température (23) de la masse de sucreries et celle-ci est diminuée de manière approximativement linéaire dans l'intervalle de temps (25).

6. Procédé selon la revendication 5, si celle-ci fait référence à la revendication 4, **caractérisé en ce que** la température (23) de la masse de sucreries dans l'intervalle de temps (25) est diminuée de manière approximativement linéaire, en augmentant le débit volumique (26) du fluide de refroidissement de la zone de refroidissement (3) de manière approximativement exponentielle.

7. Procédé selon au moins l'une des revendications précédentes, **caractérisé en ce que** l'intervalle de temps (25) se termine lorsque le degré de thermorégulation (27) est à peu près constant.

8. Procédé selon au moins l'une des revendications précédentes, **caractérisé en ce que** la détermination du degré de thermorégulation (27) de la masse de sucreries après la zone de refroidissement (3) est répétée automatiquement dans l'intervalle de temps (25) environ toutes les 5 à 15 minutes.

9. Procédé selon au moins l'une des revendications précédentes, **caractérisé en ce que** la masse de sucreries présente, au début du procédé, lors de l'insertion dans la zone de refroidissement (3) du thermorégulateur (1), une température relativement élevée pour la masse de sucreries concernée, qui garantit qu'aucun cristal n'existe dans la masse de sucreries.

10. Thermorégulateur (1) pour la thermorégulation d'une masse de sucreries, avec
un dispositif (13) pour la détermination du degré de thermorégulation (27) de la masse de sucreries à thermoréguler dans le thermorégulateur (1), **caractérisé par**
un dispositif (14) pour l'apprentissage du thermorégulateur (1) pour la capacité de réglage direct d'un degré de thermorégulation (27) de la masse de sucreries à thermoréguler dans le thermorégulateur (1), ce dispositif étant conçu pour l'exécution du procédé selon au moins l'une des revendications 1 à 9 et comprend, pour cela, un logiciel et une commande à mémoire programmable (17) pour l'exécution du logiciel.

11. Logiciel avec des instructions, lors de l'exécution desquelles par une commande à mémoire programmable (17), fait en sorte que la commande à mémoire programmable (17) exécute le procédé selon au moins l'une des revendications 1 à 9, plus particulièrement dans un thermorégulateur (1) selon la revendication 10.

12. Procédé de réglage ou de l'adaptation d'un thermorégulateur (1) pour l'exécution du procédé selon au moins l'une des revendications 1 à 9 au moyen du logiciel selon la revendication 11.
